# EUROPEAN PATENT APPLICATION

(11) **EP 4 420 818 A1**
(43) Date of publication of application: **28.08.2024**
(21) Application number: 22883195.4
(22) Date of filing: 19.08.2022
(51) Int. Cl.: B23K 26/00

(54) **LASER PROCESSING DEVICE AND LASER PROCESSING METHOD**

(30) Priority: 22.10.2021 JP 2021173212
(71) Applicant: Panasonic Intellectual Property Management Co., Ltd., Kadoma-shi, Osaka 571-0057 (JP)
(72) Inventor: OTA,Takahiro, Osaka 571-8506 (JP)
(74) Representative: Murgitroyd & Company
(86) International application number: PCT/JP2022/031455
(87) International publication number: WO 2023/067883

(57) **Abstract**

This laser processing device comprises a processing pattern input unit (621), a two-dimensional display unit (620), a three-dimensional position display data generation unit (623) for generating three-dimensional position display data compatible with three-dimensional display, a profile information input unit (625), a three-dimensional display unit (624), a processing-condition-setting unit (627) for displaying the position of a processing pattern on a surface being processed by using the three-dimensional position display data and setting a processing condition as position information, and a three-dimensional laser processing control data generation unit (628) for generating three-dimensional laser processing control data in accordance with the processing condition. The processing condition is edited after display is carried out such that the processing pattern is replaced with three-dimensional position display data having a smaller data volume by a setting terminal (100); therefore, it is possible to smoothly edit the processing condition.

## Description

### TECHNICAL FIELD

The present invention relates to a laser processing device, and, more particularly, to a laser processing device and a laser processing method that allow for smooth setting of three-dimensional processing.

### BACKGROUND ART

Recent laser processing devices are capable of performing three-dimensional processing such as printing performed on a three-dimensional workpiece. In such a laser processing device, a processing pattern including text or planar figures is set for three-dimensional processing. Typically, the processing pattern is first input as two-dimensional information. Data of the three-dimensional shape of a workpiece that is subject to processing is also input. Then, information of a height-wise direction is added to convert the two dimensional processing pattern into the three-dimensional shape of the workpiece. In this case, the three-dimensional shape such as that of a curved surface or the like has to be specified. Such an operation, however, is not easy, and is difficult, especially, for a beginner who is not used to handling three-dimensional data.

In this regard, with the invention described in Patent Literature 1, a basic figure resembling the three-dimensional shape of a processing subject surface is specified to display a three-dimensional representation of the workpiece on a screen. A processing pattern is pasted to the processing subject surface on the screen. This allows the planar processing pattern to be easily converted into a three-dimensional shape. Thus, even a beginner, who is not used to handling three-dimensional data, can check the processing result that is based on the processing pattern applied to the processing subject surface of the workpiece. This reduces the burden on the operator.

### CITATION LIST

### Patent Literature

Patent Literature 1: Japanese Laid-Open Patent Publication No. 2008-030070

### SUMMARY OF INVENTION

### Technical Problem

With a laser processing device such as that described in Patent Literature 1, to check the processing result as described above, the processing pattern input as two-dimensional data has to be converted into three-dimensional data and displayed on a screen to adjust the positions where the workpiece is processed.

However, the amount of two-dimensional data, which includes vector information for laser emission, is large. Thus, when the two-dimensional data is converted into the three-dimensional data, the processing load on the laser processing device is large. In particular, a large amount of information, such as a product name, a serial number, a logo mark, a barcode, a two-dimensional barcode, and a precautionary note may have to be simultaneously printed on the same workpiece. In such a case, the processing load on the laser processing device will become too large, thereby slowing actions.

It is an objective of the laser processing device and the laser processing method in accordance with the present invention to allow a three-dimensional processing result, which is based on a processing pattern applied to a processing subject surface of a workpiece, to be smoothly checked and edited without adding a large processing load on the laser processing device.

### Solution to Problem

To achieve the above objective, a laser processing device according to the present invention is configured to emit a laser beam to a processing subject surface of a workpiece arranged in a working area and perform processing based on a set processing pattern. The laser processing device includes a laser beam source that generates a processing laser beam, a scanner that scans the working area with the processing laser beam emitted from the laser beam source, and a controller that controls the laser beam source and the scanner. The laser processing device is characterized by a processing pattern input unit to which the processing pattern is input as two-dimensional information, a two-dimension displaying unit for displaying a screen used to edit the processing pattern input from the processing pattern input unit, a three-dimensional positioning data representation generator for generating a three-dimensional positioning data representation corresponding to a three-dimensional representation representing a printing area of the processing pattern edited on the screen displayed by the two-dimension displaying unit, a profile information input unit to which profile information representing a three-dimensional shape of a processing subject surface is input, a three-dimension displaying unit for displaying a screen for editing the profile information input from the profile information input unit, a processing condition setting unit for setting a processing condition as position information on the screen displayed by the three-dimension displaying unit by representing a position of the processing pattern with the three-dimensional positioning data representation on the processing subject surface shown based on the profile information, and a three-dimensional laser processing control data generator for generating three-dimensional laser processing control data used to process the processing subject surface based on the processing pattern in accordance with the processing condition set by the processing condition setting unit.

The processing pattern includes text data, a symbol, a barcode, or a two-dimensional barcode. The processing pattern input unit reads laser emission vector information corresponding to information input from laser emission vector information that is stored in advance based on input information to generate a two-dimensional processing pattern.

The processing pattern includes an image data. The processing pattern input unit generates laser emission vector information corresponding to an input image data to generate a two-dimensional processing pattern.

The three-dimensional positioning data representation generated by the three-dimensional positioning data representation generator may be data in which the processing pattern is grouped in accordance with a predetermined condition and collectively displayed by the three-dimension displaying unit. Further, the three-dimensional positioning data representation generated by the three-dimensional positioning data representation generator may be data that is grouped and collectively displayed on the three-dimension displaying unit on condition that the processing pattern is of the same type.

The three-dimensional positioning data representation generated by the three-dimensional positioning data representation generator may be data in which the processing pattern of different types is grouped in accordance with a predetermined condition and collectively displayed by the three-dimension displaying unit.

The predetermined condition may be a predetermined range set in advance or a number of predetermined processing patterns set in advance.

The three-dimensional positioning data representation generated by the three-dimensional positioning data representation generator may be data for displaying an outline indicating a printing area of the processing pattern. The outline may be data displayed as a rectangle having a width in a scanning direction of the processing pattern and a height in a direction orthogonal to the scanning direction. Further, the rectangle may include a line segment that is a tangent contacting the printing area.

The outline may be data displayed as a polygon surrounding the processing pattern. A vertex of the polygon may be a specified singularity point including a starting point, an ending point, an inflection point, and a vertex for laser processing of the processing pattern. The outline may be data displayed as a circle or an ellipse encompassing the processing pattern.

When the three-dimensional positioning data representation is text data and a symbol, text and symbol of a processing pattern may be displayed separated from each other. The three-dimensional positioning data representation may be data for distinguishing each type with a different marking. The three-dimensional positioning data representation is data for distinguishing each type with a different color.

The scanner includes a first scanner that has the processing laser beam emitted from the laser beam source scan the working area in a first direction, and a second scanner that scans a second direction orthogonal to the first direction with the scanned laser beam of the first scanner.

The profile information input unit may store basic figures in advance as profile information indicating a three-dimensional shape of the processing subject surface, and generate profile information through selection of a basic figure that is approximate to the processing subject surface of the workpiece from the basic figures. Further, the profile information input unit may generate profile information from three-dimension data representing a three-dimensional shape of the workpiece that is input as the profile information indicating a three-dimensional shape of the processing subject surface of the workpiece.

A laser processing method according to the present invention is for use with a laser processing device configured to emit a laser beam to a processing subject surface of a workpiece arranged in a working area and perform processing based on a set processing pattern. The laser processing device includes a laser beam source that generates a processing laser beam, a scanner that scans the working area with the processing laser beam emitted from the laser beam source, and a controller that controls the laser beam source and the scanner. The laser processing method is characterized by a processing pattern inputting step of inputting the processing pattern as two-dimensional information, a two-dimension displaying step of displaying a screen on a display unit to edit the processing pattern input in the processing pattern inputting step, a three-dimensional positioning data representation generating step of generating a three-dimensional positioning data representation corresponding to a three-dimensional representation representing a laser beam printing area of the processing pattern edited in the two-dimension displaying step, a profile information inputting step of inputting profile information representing a three-dimensional shape of a processing subject surface, a three-dimension displaying step of displaying a screen on the display unit for editing the profile information input in the profile information inputting step, a processing condition setting step of setting a processing condition as position information by representing a position of the processing pattern with the three-dimensional positioning data representation on the processing subject surface shown based on the profile information in the three-dimension displaying step, and a three-dimensional laser processing control data generating step of generating three-dimensional laser processing control data used to process the processing subject surface based on the processing pattern in accordance with the processing condition set in the processing condition setting step.

### Advantageous Effects of Invention

The laser processing device and the laser processing method according to the present invention allow a three-dimensional processing result, which is based on a processing pattern applied to a processing subject surface of a workpiece, to be smoothly checked and edited without adding a large processing load on the laser processing device.

### BRIEF DESCRIPTION OF DRAWINGS

Fig. 1 is a perspective view showing a laser processing device of the present embodiment in its entirety.
Fig. 2 is a block diagram showing the laser processing device of the present embodiment and a setting terminal.
Fig. 3 is a block diagram showing controller functionalities in the present embodiment.
Fig. 4 is a flowchart illustrating a process performed with the laser processing device of the present embodiment.
Fig. 5A is a diagram illustrating processing patterns displayed on a two-dimension display screen.
Fig. 5B is a diagram illustrating moved and added processing patterns.
Fig. 6A is a diagram illustrating a basic figure that is profile information and displayed on a three-dimensional display screen.
Fig. 6B is a diagram showing the basic figure in a different orientation.
Fig. 7A is a diagram illustrating a state in which three-dimensional positioning data representations of processing patterns are shown on a processing subject surface of a cylinder in the three-dimensional display screen.
Fig. 7B is a diagram showing the three-dimensional positioning data representations at different positions.
Fig. 8 is a perspective view showing a workpiece that has been processed with processing patterns on the processing subject surface, which is defined on a cylinder.
Fig. 9 is a diagram illustrating a state in which three-dimensional positioning data representations of processing patterns are shown on a processing subject surface of a sphere in the three-dimensional display screen.
Figs. 10A to 10J are diagrams showing further examples of expressions of the three-dimensional positioning data representations.
Fig. 11A is a diagram illustrating one example of a processing pattern.
Fig. 11B is a diagram showing the processing pattern grouped under a predetermined condition and converted into a three-dimensional positioning data representation.
Fig. 12A is a diagram illustrating another example of a processing pattern.
Fig. 12B is a diagram showing the processing pattern grouped under another predetermined condition and converted into a three-dimensional positioning data representation.
Fig. 13A is a diagram illustrating a further example of a processing pattern.
Fig. 13B is a diagram showing the processing pattern grouped under a further predetermined condition and converted into a three-dimensional positioning data representation.
Fig. 14A is a diagram illustrating a further example of a processing pattern.
Fig. 14B is a diagram showing the processing pattern grouped under a further predetermined condition and converted into a three-dimensional positioning data representation.
Fig. 15A is a diagram illustrating a further example of a processing pattern.
Fig. 15B is a diagram showing the processing pattern grouped under a further predetermined condition and converted into a three-dimensional positioning data representation.

### DESCRIPTION OF EMBODIMENTS

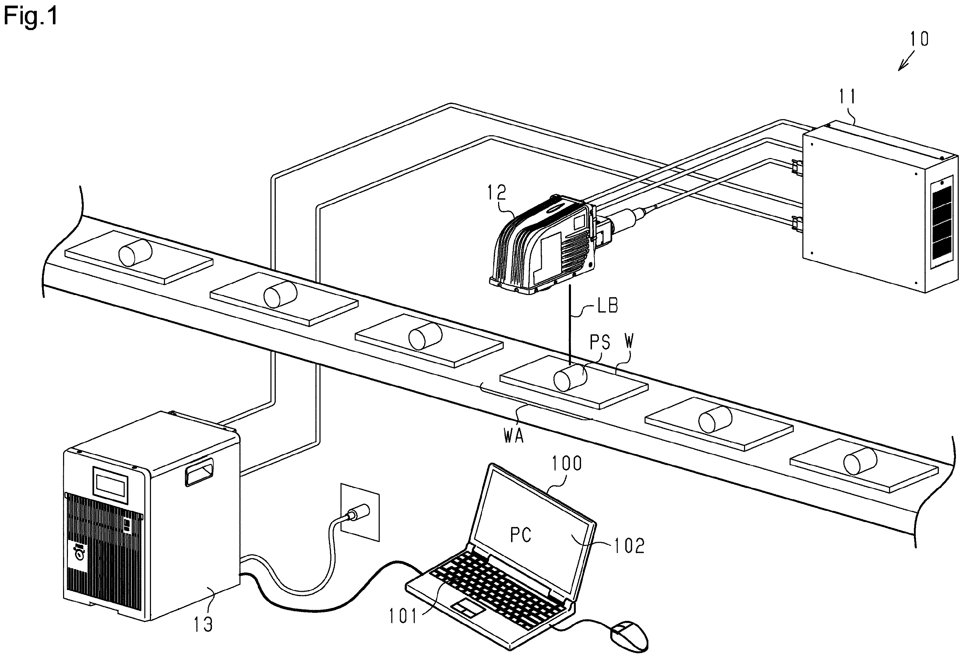

A laser processing device 10 according to one embodiment of the present invention will now be described with reference to Figs. 1 to 10.

### Laser Processing Device 10

Fig. 1 is a perspective view showing the laser processing device 10 of the present embodiment in its entirety. As shown in Fig. 1, the laser processing device 10 of the embodiment includes an oscillator unit 11, a head unit 12, and a controller unit 13. A setting terminal 100 is connected to the controller unit 13. A conveyor transports a workpiece W to a working area WA below the head unit 12. In this state, a processing laser beam LB can scan a processing subject surface PS of the workpiece W.

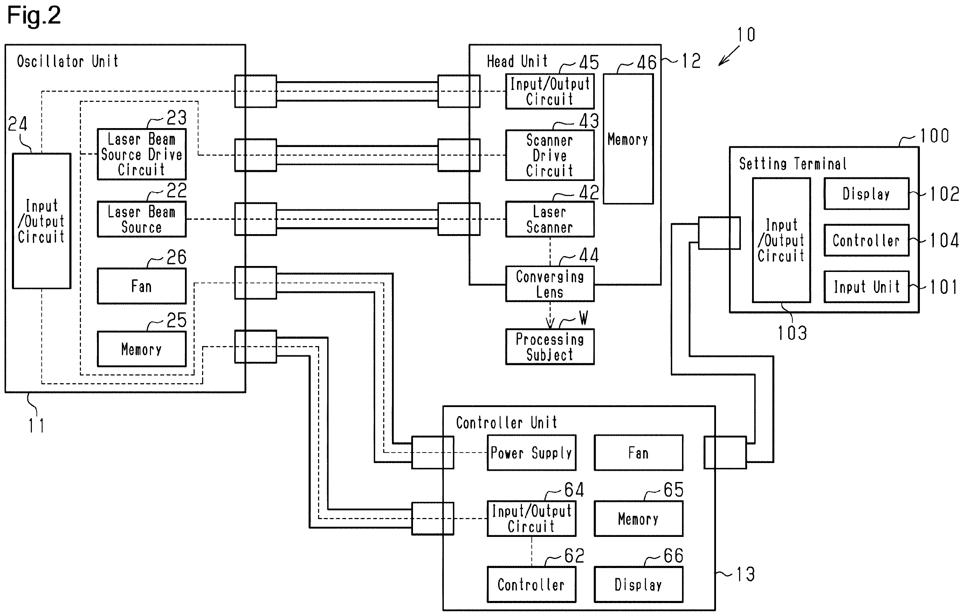

Fig. 2 is a block diagram showing the laser processing device 10 of the present embodiment and the setting terminal 100.

### Oscillator Unit 11

As shown in Fig. 2, the oscillator unit 11 houses a laser beam source 22, a laser beam source drive circuit 23, an input/output circuit 24, memory 25, and the like in a case.

The laser beam source 22 emits the processing laser beam LB and is selected in accordance with the processing subject from, for example, a YAG laser, a CO2 laser, a fiber laser, or the like that differ in wavelength or light intensity.

The laser beam source drive circuit 23 drives the laser beam source 22. The input/output circuit 24 is used to exchange signals with an external device. The memory 25 stores information used to control the oscillator unit 11.

### Head Unit 12

As shown in Fig. 2, the head unit 12 houses a laser scanner 42, a scanner drive circuit 43, a converging lens 44, an input/output circuit 45, and memory 46 in a case.

### Laser Scanner 42

The laser scanner 42 performs scanning with the processing laser beam LB emitted from the laser beam source 22. The laser scanner 42 includes two galvanometer mirrors and a galvanometer scanner that drives the two galvanometer mirrors with actuators. Although not shown in the drawings, the laser scanner 42 includes a first scanner that has the processing laser beam LB emitted from the laser beam source 22 scan the working area WA in an X-direction, which is a first direction. The laser scanner 42 also includes a second direction that has the processing laser beam LB perform scanning in a Y-direction, which is a second direction that is substantially orthogonal to the X-direction.

### Scanner Drive Circuit 43

The scanner drive circuit 43 drives the laser scanner 42 and controls the actuators of the galvanometer mirrors. The scanner drive circuit 43 controls and drives the two galvanometer mirrors with the actuators of the laser scanner 42 so that the processing laser beam LB scans the processing surface of the workpiece W, which is the processing subject, in two directions (two-dimensional directions).

### Converging Lens 44

The converging lens 44 converges the scanning light and emits the light out of the laser scanner 42. The processing laser beam LB is focused in a Z-direction at the position of a printing area PA where the processing subject surface PS of the workpiece W is irradiated with the processing laser beam LB. A beam expander, for example, may be used. In the present embodiment, the laser scanner 42 and the converging lens 44 form a three-dimensional laser scanner.

### Input/Output Circuit 45

The input/output circuit 45 is used to exchange signals with an external device. The memory 46 stores control information of the head unit 12.

### Controller Unit 13

The controller unit 13 houses a controller 62, an input/output circuit 64, and memory 65 in a case.

### Controller 62

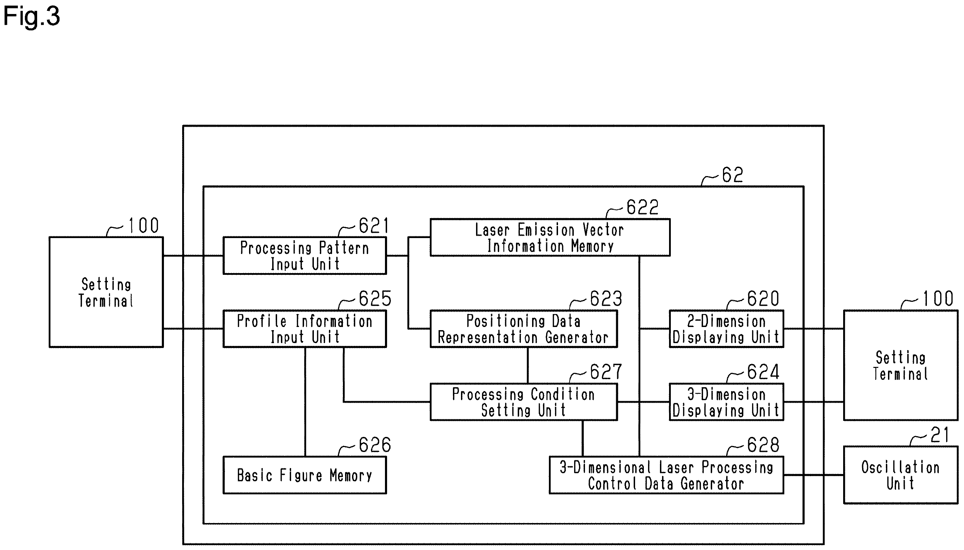

Fig. 3 is a diagram showing the functionalities of the controller 62 in the present embodiment.

The controller 62 includes a processing pattern input unit 621 to which a processing pattern PP is input as two-dimensional information. Further, a two-dimension displaying unit 620 displays the processing pattern PP input from the processing pattern input unit 621 on a display 102 of the setting terminal 100 to edit the processing pattern PP. The controller 62 includes a three-dimensional positioning data representation generator 623 that generates a three-dimensional positioning data representation PI for three-dimensional representation of the printing area PA of the processing laser beam LB for the processing pattern PP edited on a two-dimension display screen 105. Further, the controller 62 includes a profile information input unit 625 for inputting profile information PD representing the three-dimensional shape of the processing subject surface PS. The controller 62 includes a three-dimension displaying unit 624 that displays the profile information PD input from the profile information input unit 625 for editing. The three-dimension displaying unit 624 displays a three-dimension display screen 106 on the display 102 of the setting terminal 100. The position of the processing pattern PP on the processing subject surface PS, which is displayed based on the profile information PD on the three-dimension display screen 106, is represented by the three-dimensional positioning data representation PI. Further, the controller 62 includes a basic figure memory 626 that stores basic figures. The controller 62 also includes a processing condition setting unit 627 that sets a processing condition PC as position information. The controller 62 includes a three-dimensional laser processing control data generator 628 that generates three-dimensional laser processing control data CPD, which is used to process the processing subject surface PS, based on the processing pattern PP in accordance with the processing condition PC set by the processing condition setting unit 627.

### Processing Pattern Input Unit 621

The "processing pattern PP" sets the path of the processing laser beam LB for laser irradiation based on text data of a string of input characters and a standardized marking such as a barcode in addition to any input line segment, figure, non-standardized marking, or the like. The processing pattern PP is generated as two-dimension information of vector information and ON/OFF information used for laser irradiation with the laser scanner 42. For example, the processing pattern input unit 621 stores in advance the path of the processing laser beam LB for marking the character of "A" in a laser emission vector information memory 622. When "A" is input with a keyboard, corresponding "laser emission vector information" is read as the processing pattern for "A". Then, the "laser emission vector information" corresponding to "A" is stored.

Further, free straight lines, curved lines, figures, and the like are converted from an image data into the laser emission vector information and stored.

If the processing subject is a horizontal plane, the workpiece W is processed with only the "laser emission vector information," which is stored without any conversions.

When the processing subject is three-dimensional, three-dimensional data will have to be generated. More specifically, the processing laser beam LB will have to be focused at a position in the Z-direction where the processing laser beam LB will irradiate the printing area PA in the processing subject surface PS of the workpiece W. Thus, in the present embodiment, depth adjustment in the Z-direction is performed in accordance with the profile information PD. A beam expander, for example, is used.

### Two-Dimension Displaying Unit 620

The processing pattern PP, which is input from the processing pattern input unit 621, is output as an image by the two-dimension displaying unit 620. The image from the two-dimension displaying unit 620 is output via the input/output circuit 64 and an input/output circuit 103 and displayed as the two-dimension display screen 105 on the display 102 of the setting terminal 100.

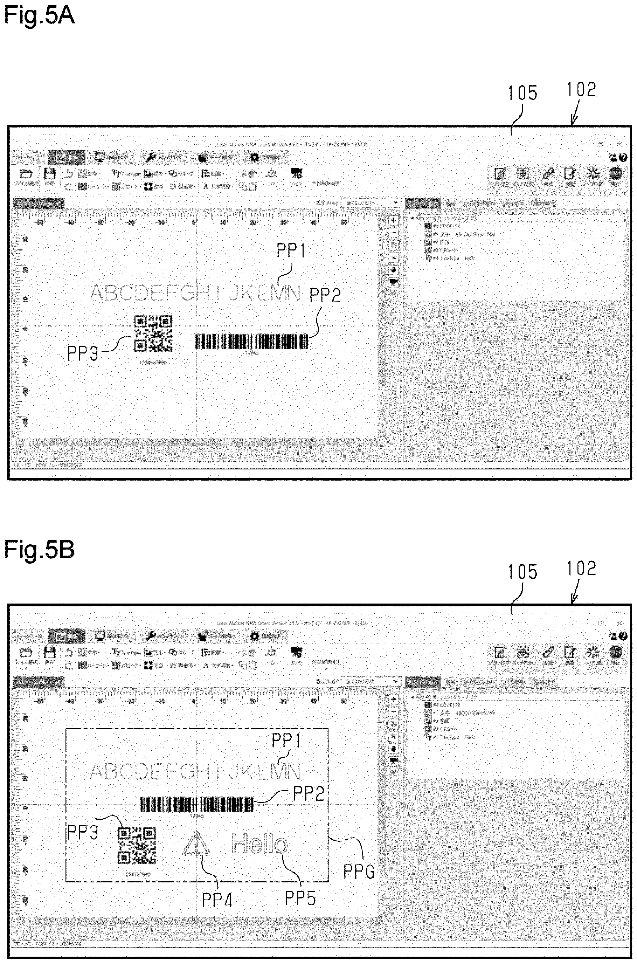

Fig. 5A is a diagram illustrating processing patterns PP displayed on the two-dimension display screen 105 of the display 102 of the setting terminal 100. The two-dimension display screen 105 on the display 102 of the setting terminal 100 shows the range of the working area WA that is laser-scannable. The shown range can be changed, and part of the screen can be enlarged. A user can edit the processing patterns PP while looking at the processing patterns PP displayed on the two-dimension display screen 105 by the two-dimension displaying unit 620. Editing allows for the addition, deletion, enlargement, reduction, movement, change in font, grouping, and ungrouping of the processing patterns PP.

### Editing of Processing Pattern PP

Fig. 5A shows, for example, a processing pattern PP1 of a character string "ABCDEFGHIJKLMN", a processing pattern PP2 of a one-dimensional barcode, and a processing pattern PP3 of a two-dimensional barcode.

To input the character string "ABCDEFGHIJKLMN", the user uses a keyboard and inputs the character string "ABCDEFGHIJKLMN". As a result of the input, the corresponding "laser emission vector information," which is stored in the laser emission vector information memory 622, will be read and displayed on the two-dimension display screen 105.

To input the processing pattern PP2 of the one-dimensional barcode, the user selects an icon for editing barcodes from the two-dimension display screen 105 and inputs a specified numerical string with the keyboard. With a Universal Product Code, a country code (flag) of two or three digits, a manufacturer number (maker code) of five or seven digits, a product number (item code) of five or three digits, and an error prevention number (check digit) of one digit are input. This is converted so that the corresponding "laser emission vector information" stored in the laser emission vector information memory 622 is read, and the barcode of the processing pattern PP2 is displayed on the two-dimension display screen 105.

To input the processing pattern PP3 of the two-dimensional barcode, the user selects an icon for editing barcodes from the two-dimension display screen 105 and inputs a specified numerical string with the keyboard. In the present embodiment, a QR code (registered trademark of Denso Wave Incorporated) can be input, and the necessary data, cell number, and/or the like such as number, alphabet, kanji, kana, symbol binary, control code, and/or the like are input. This is converted so that the corresponding "laser emission vector information" stored in the laser emission vector information memory 622 is read, and the QR code of the processing pattern PP2 is displayed on the two-dimension display screen 105.

Fig. 5B is a diagram illustrating moved and added processing patterns PP. The user can use a keyboard or a mouse, which define an input unit 101, to select and move a processing pattern PP on a screen. In this case, the processing pattern PP2 and the processing pattern PP3 are moved. The user selects the "layout" icon and drags a processing pattern PP with the mouse to the desired position.

Further, a processing pattern PP4 of a warning mark complying to the standards for safety signs specified by ISO3864 and JISZ9101, and a processing pattern PP5 of an original logo "Hello" are added.

A symbol such as a warning mark standardized by JIS is handled in the same manner as text.

The user inputs an image data through wired or wireless communication with the input unit 101 for free straight lines, curved lines, or figures such as the original "Hello" logo . An icon for editing a figure is selected from the screen of the display 102 to specify the input image data as a processing pattern. This converts the image data into the laser emission vector information that is stored as the processing pattern PP and displayed on the two-dimension display screen 105.

### Grouping Processing Patterns PP

After the processing patterns PP4 and PP5 are added, the user selects the "group" icon, selects the processing patterns PP1 to PP5, and then clicks the "grouping" icon. This groups the processing patterns PP1 to PP5 into a processing pattern PPG that is handled as a single processing pattern PP.

The "ungrouping" icon is clicked to dismantle the grouped processing pattern PPG. When the group is dismantled, the processing pattern PPG returns to the independent processing patterns PP1 to PP5.

### Basic Grouping Rule of Present Embodiment

In the present embodiment, for example, the processing pattern PP1 of the character string "ABCDEFGHIJKLMN" is a processing pattern of the same type. Thus, the character string "ABCDEFGHIJKLMN" is automatically integrated and grouped as a three-dimensional positioning data representation PI.

The processing pattern PP2 of the one-dimensional barcode and the processing pattern PP3 of the two-dimensional barcode are each a processing pattern PP including a "code" body and a numerical suffix. The "code" and the "suffix" are automatically integrated into the same processing pattern PP.

Further, referring to Fig. 5B, the processing patterns PP1 to PP5 in a range specified by the user and shown by the double-dashed lines on the two-dimension display screen 105 are grouped into the processing pattern PPG.

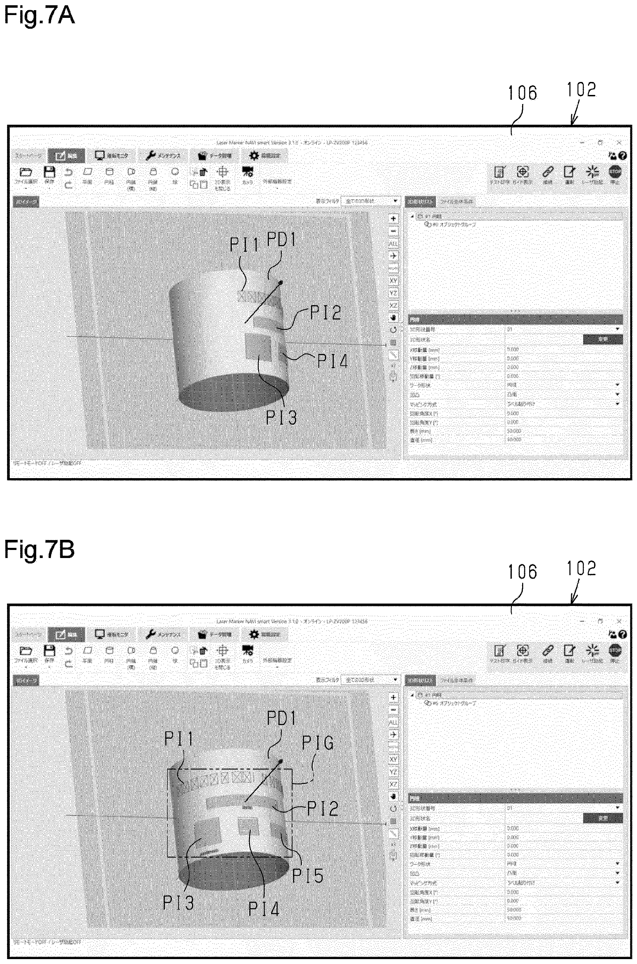

As shown in Fig. 7B, the grouped processing pattern PPG is represented by a three-dimensional positioning data representation PIG displayed with a rectangular outline having a width in the scanning direction of the processing pattern PP and a height in a direction orthogonal to the scanning direction.

### Profile Information Input Unit 625

The profile information input unit 625 allows the processing subject surface PS of the workpiece Wto be displayed in a three-dimensional coordinate space on the three-dimension display screen 106. In the present embodiment, the "three-dimension display screen 106" corresponds to a screen displayed on the display 102 of the setting terminal 100 by the three-dimension displaying unit 624.

The "profile information PD" is three-dimensional coordinate data representing the processing subject surface PS of the workpiece W. The three-dimensional coordinate data may be generated by, for example, a CAD. In this case, the CAD data is formatted into a predetermined data format for three-dimensional representation on the three-dimension display screen 106. The input of three-dimensional data is simple when CAD data of the workpiece W is available. If CAD data is not available, three-dimensional data would have to be generated from scratch. This requires a CAD device, and one would have to be skilled to handle three-dimensional data. In the present embodiment, "basic figures" such as a plane, a parallelepiped, a cylinder, a sphere, and the like are prepared as basic shapes. Thus, by inputting predetermined dimensions, profile information PD that is approximate to the processing subject surface PS of the workpiece W can be input even if three-dimensional data such as CAD data is not available.

### Three-Dimension Displaying Unit 624

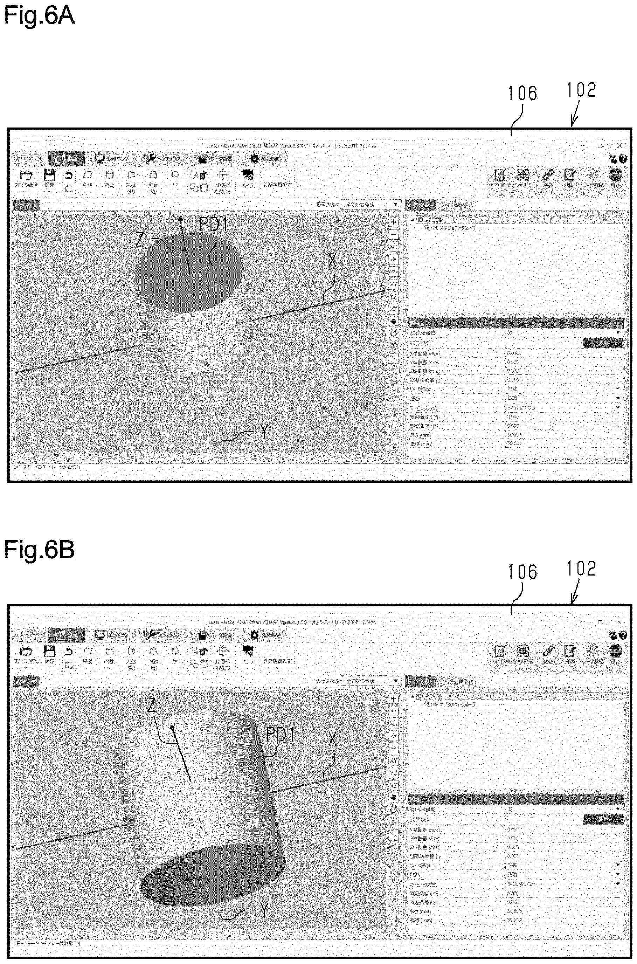

Fig. 6A is a diagram illustrating a basic figure represented by the profile information PD and displayed on the three-dimension display screen 106.

The profile information PD input to the profile information input unit 625 is output as an image by the three-dimension displaying unit 624. The image from the three-dimension displaying unit 624 is output via the input/output circuit 64 and the input/output circuit 103 and then displayed as the three-dimension display screen 106 on the display 102 of the setting terminal 100. The profile information PD1 for a case where a cylinder is selected as the basic figure will now be described.

When "cylinder" is specified on the three-dimension display screen 106 displayed on the display 102 of the setting terminal 100, the three-dimension display screen 106 serves as an editing screen for specifying the height, diameter, and the like of the cylinder. Consequently, the profile information input unit 625 reads data of the cylinder from the basic figure data stored in the basic figure memory 626. Then, the working area WA is shown in three-dimensional coordinates on the three-dimension display screen 106 of the display 102 of the setting terminal 100. This displays a cylinder representing the profile information PD1 at a predetermined position and predetermined orientation in the coordinate system of the working area WA. In Fig. 6A, the cylinder is oriented so that its axis coincides with the z-axis.

Fig. 6B is a diagram showing the cylinder, which is a basic figure and represents the profile information PD1, oriented differently. In this case, to print the processing pattern PP in the horizontal direction on the cylinder, the orientation of the profile information PD1 is changed from the state of Fig. 6A. The orientation can be changed by dragging the cylinder in a rotation mode on the three-dimension display screen 106. Alternatively, the orientation can be changed by setting numerical values so that the axial direction is parallel to the y-axis direction.

### Three-Dimensional Positioning Data Representation Generator 623

After the input of profile information is completed, the processing pattern PP for the profile information PD1 representing the workpiece W may be displayed on the three-dimension display screen 106. In the present embodiment, however, in this state, the three-dimensional positioning data representation generator 623 generates the three-dimensional positioning data representation PI in correspondence with the processing pattern PP. The generated three-dimensional positioning data representation PI is output as an image together with the cylinder representing the profile information PD by the three-dimension displaying unit 624. The "three-dimensional positioning data representation PI" is for displaying an image of the processing pattern PP at the same position as the workpiece W, which represents the profile information PD, on the three-dimension display screen 106. The amount of data of the image is less than that of the processing pattern PP. In several examples, the "three-dimensional positioning data representation PI" includes, in the profile information PD, position information of the processing pattern PP and the data of the image, the amount of data of which is less than the processing pattern PP.

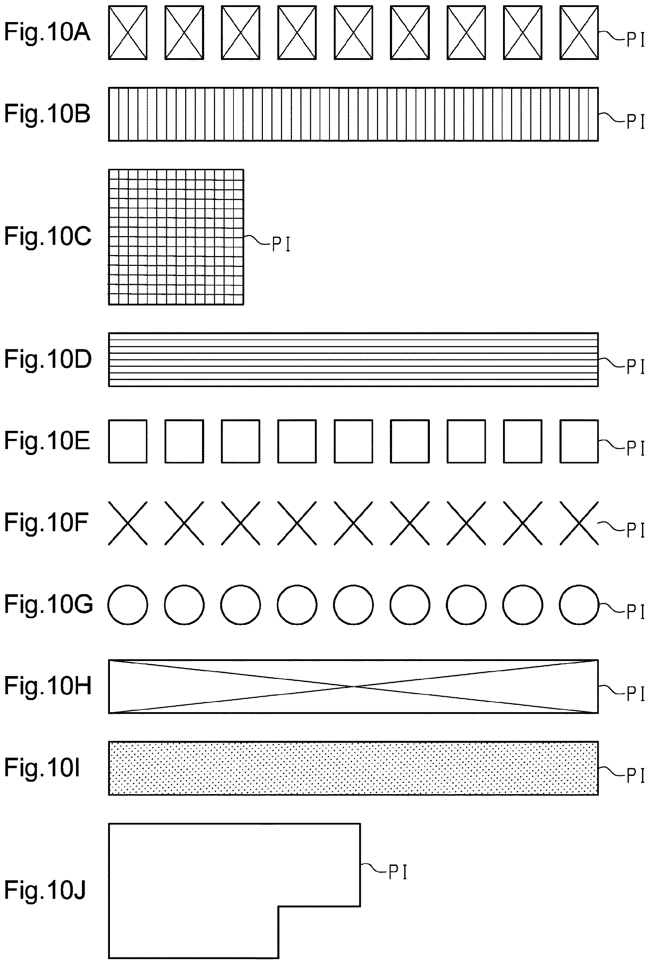

Fig. 7A is a state illustrating a state in which the three-dimensional positioning data representations PI of the processing patterns PP are displayed on the processing subject surface PS of the workpiece W, which is a cylinder, on the three-dimension display screen 106. In this case, the processing pattern PPG, which is two-dimensional information, is added to the profile information PD of the cylinder. The processing pattern PP1 of the character string "ABCDEFGHIJKLMN" shown in Fig. 5B is displayed as a three-dimensional positioning data representation PI1 with each character represented by an "X" in a rectangular "box" as shown in Fig. 10A. This allows the three-dimensional positioning data representation PI1 to allow for intuitive recognition and implication of characters. For example, if the three-dimensional positioning data representation PI1 is "A," a rectangular outline will be displayed having height h and width w of the printing area PA of the character. The same applies to "I" in which case width w will be relatively narrow.

The processing pattern PP2 of the one-dimensional barcode shown in Fig. 5B is displayed as a three-dimensional positioning data representation PI2 with the characters totally represented by a rectangular outline as shown in Fig. 10B. The three-dimensional positioning data representation PI2 is also displayed with a rectangular outline having height h and width w of the printing area PA. The three-dimensional positioning data representation PI2 of the barcode shown in the rectangular outline includes a plurality of vertical lines. This allows the three-dimensional positioning data representation PI2 to allow for intuitive recognition and implication of a one-dimensional barcode.

The processing pattern PP3 of the two-dimensional barcode shown in Fig. 5B is displayed as a three-dimensional positioning data representation PI3 and entirely represented by a rectangular outline as shown in Fig. 10C. The three-dimensional positioning data representation PI3 is also displayed with a rectangular outline having height h and width w of the printing area PA. Further, the rectangular three-dimensional positioning data representation PI3 of the two-dimensional barcode is shown with lines arranged in the form of a matrix. This allows the three-dimensional positioning data representation PI3 to allow for intuitive recognition and implication of a two-dimensional barcode.

The processing pattern PP4 of the warning mark shown in Fig. 5B is displayed as a three-dimensional positioning data representation PI4 and entirely represented by a rectangular outline including horizontal lines as shown in Fig. 10D. The three-dimensional positioning data representation PI4 is also displayed with a rectangular outline having height h and width w of the printing area PA. Further, a three-dimensional positioning data representation PI5 displayed as a rectangle including horizontal lines allows for intuitive recognition and implication of content other than a character, a barcode, and a two-dimensional barcode.

### Processing Condition Setting Unit 627

Fig. 7B is a diagram showing the three-dimensional positioning data representations PI1 to PI5 that have been moved. The three-dimensional positioning data representations PI1 to PI5 that are displayed here indicate the processing position of the grouped processing pattern PPG. The three-dimensional positioning data representations PI1 to PI5 are also grouped and integrated into the same three-dimensional positioning data representation PIG. An icon for movement is clicked on the three-dimension display screen 106. Then, the three-dimensional positioning data representation PIG is selected and dragged to move the three-dimensional positioning data representation PIG along the processing subject surface PS of the profile information PD1.

In Fig. 7A, the processing pattern PPG shown in Fig. 5B is not entirely included in the processing subject surface PS of the profile information PD1. Thus, the three-dimensional positioning data representation PIG is moved leftward in the screen. As shown in Fig. 7B, the three-dimensional positioning data representation PIG is adjusted so that the processing pattern PPG is included in the processing subject surface PS of the profile information PD1. In case the pattern is still not entirely included in the surface, the screen is temporarily switched to the two-dimension display screen 105. Then, the grouped processing pattern PPG is dismantled, and the position of each of the processing patterns PP1 to PP5 is adjusted. Alternatively, the processing patterns PP1 to PP5 are reduced in size. Then, the processing patterns PP1 to PP5 are regrouped into the processing pattern PPG. Further, the screen returns to the three-dimension display screen 106. The position of the three-dimensional positioning data representation PIG is adjusted reflecting the edited processing patterns PP1 to PP5.

Such adjustment is performed on all of the three-dimensional positioning data representations PI1 to PI5. Thus, the processing pattern PPG remains stored as two-dimensional information.

The position and orientation of the cylinder representing the profile information PD1 may be edited on the three-dimension display screen 106. For example, the orientation shown in Fig. 6B may be returned to the orientation shown in Fig. 6A.

The positional relationship of the profile information PD1 and the three-dimensional positioning data representation PIG is determined in this manner. Then, an operation for initiating laser processing is performed. In the present embodiment, for example, an icon for initiating printing is clicked.

### Three-Dimensional Laser Processing Control Data Generator 628

When the icon for initiating printing is clicked, the three-dimensional laser processing control data generator 628 generates the three-dimensional laser processing control data CPD. The three-dimensional laser processing control data CPD is three-dimensional information of three-dimensional coordinate data acquired by converting the two-dimensional information of the stored processing patterns PP1 to PP5 based on the three-dimensional coordinate data obtained from the three-dimensional positioning data representations PI1 to PI5.

The "three-dimensional laser processing control data CPD" is control data used by the laser scanner 42 to process the processing patterns PP1 to PP5 with the processing laser beam LB on the processing subject surface PS of the workpiece W specified by the profile information PD1.

The processing amount would increase if the stored two-dimensional information of the processing patterns PP1 to PP5 were to be converted into three-dimensional coordinate data based on the three-dimensional coordinate data acquired from the three-dimensional positioning data representations PI1 to PI5. In the present embodiment, when the positions of the profile information PD1 and the three-dimensional positioning data representations PI1 to PI5 are adjusted on the three-dimension display screen 106, such data conversion is not performed. This decreases the processing amount by a great extent. Thus, the editing of the processing condition that is adjustment of the positions of the profile information PD1 and the three-dimensional positioning data representations PI1 to PI5 on the three-dimension display screen 106 (S10) can be smoothly performed without adding load to the laser processing device 10.

### Setting Terminal 100

The controller unit 13 includes, on its case, a connector that is connectable to the setting terminal 100.

The setting terminal 100 is, for example, a notebook computer or a versatile terminal such as a tablet terminal, a Personal Digital Assistant (PDA), or a smartphone, with application software downloaded to allow various settings to be made with the laser processing device 10. In one example, the setting terminal 100 is a versatile notebook computer including the input unit 101 that allows the user to input data with a keyboard, a mouse, or the like. Further, the setting terminal 100 includes the display 102 having a display allowing various information to be displayed. The setting terminal 100 also includes the input/output circuit 103 that allows for the input and output of an image data through wired or wireless communication. The setting terminal 100 further has a controller 104 including a CPU and memory and controlling various parts.

The input unit 101 is used to perform inputs to the processing pattern input unit 621 and the profile information input unit 625.

The display 102 displays the two-dimension display screen 105 such as that shown in Fig. 5A through the two-dimension displaying unit 620 of the controller 62. Further, the display 102 switches screens to display the three-dimension display screen 106 shown in Fig. 7B through the three-dimension displaying unit 624.

### Operation of Present Embodiment

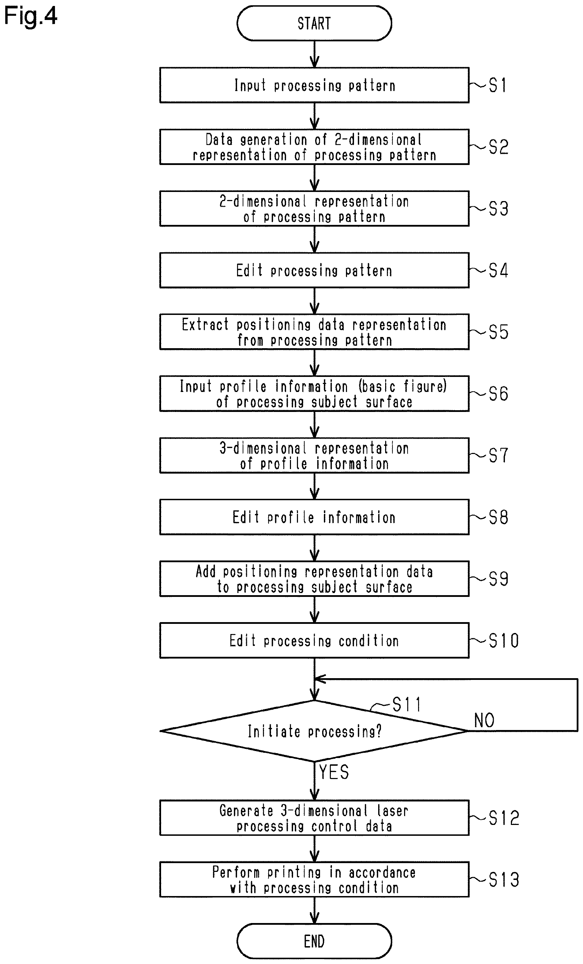

Fig. 4 is a flowchart illustrating a process performed with the laser processing device of the present embodiment. The operation of the laser processing device 10 in accordance with the embodiment will now be described with reference to the flowchart.

### Input processing pattern (S1)

The user first activates the laser processing device 10 and inputs the processing pattern PP to the input unit 101 while checking the display 102 of the connected setting terminal 100. Information for specifying a character string, a mark, a one-dimensional barcode, a two-dimensional barcode, or the like is input with the keyboard or the like as the processing pattern PP that is to be printed on the workpiece W. Further, the image data of the figure that is to be printed is input through wired or wireless communication.

### Data generation of two-dimensional representation of processing pattern PP (S2)

The processing pattern input unit 621 of the laser processing device 10 uses the input numerical values and text data to generate the processing pattern PP.

### Two-dimensional representation of processing pattern (S3)

The processing pattern PP generated by the processing pattern input unit 621 is displayed on the display 102 in the two-dimension display screen 105 by the two-dimension displaying unit 620.

### Edit processing pattern (S4)

The user edits the size and layout of the processing pattern PP in the two-dimension display screen 105 displayed on the display 102. When the processing pattern editing (S4) is completed, the processing pattern PP may be titled and saved.

### Extract three-dimensional positioning data representation from processing pattern (S5)

When the editing of the processing pattern PP is completed, the screen is switched from the two-dimension display screen 105 shown in Fig. 5B to the three-dimension display screen 106 shown in Fig. 6A. This displays the three-dimensional positioning data representations PI corresponding to the processing patterns PP on the three-dimension display screen 106. In the flowchart, the profile information PD is yet to be input. Thus, the three-dimensional positioning data representation PI is displayed as an xy plane. When the profile information PD is input in advance, the three-dimensional positioning data representation PI is displayed on the profile information PD.

The processing amount is large when the processing pattern PP, which is two-dimensional information of processing vector data for laser processing, is converted to the three-dimensional laser processing control data CPD based on the positional relationship of the profile information PD1 and the processing pattern PP. In the present embodiment, such conversion is not performed from when the editing of the processing condition PC (S10) is completed to when the icon for "initiating processing" is clicked. In the present embodiment, the processing pattern PP is converted to the three-dimensional positioning data representation PI, which is small data, to edit the processing condition PC (S10). Thus, the small data processing amount allows the processing condition PC (S10) to be smoothly edited.

### Input profile information PD (basic figure) of processing subject surface (S6)

Then, the display 102 is switched from the two-dimension display screen 105 to the three-dimension display screen 106. The shape of the workpiece W is input as the profile information PD. In this example, one of the basic figures is selected as shown in Fig. 6A without preparing any CAD data in advance. The height and diameter of the cylinder is input with the input unit 101 of the setting terminal 100.

### Three-dimensional representation of profile information (S7)

The three-dimension display screen 106 displays the profile information PD1 with the axis of the cylinder lying along the z-axis in accordance with the default setting.

### Edit profile information (S8)

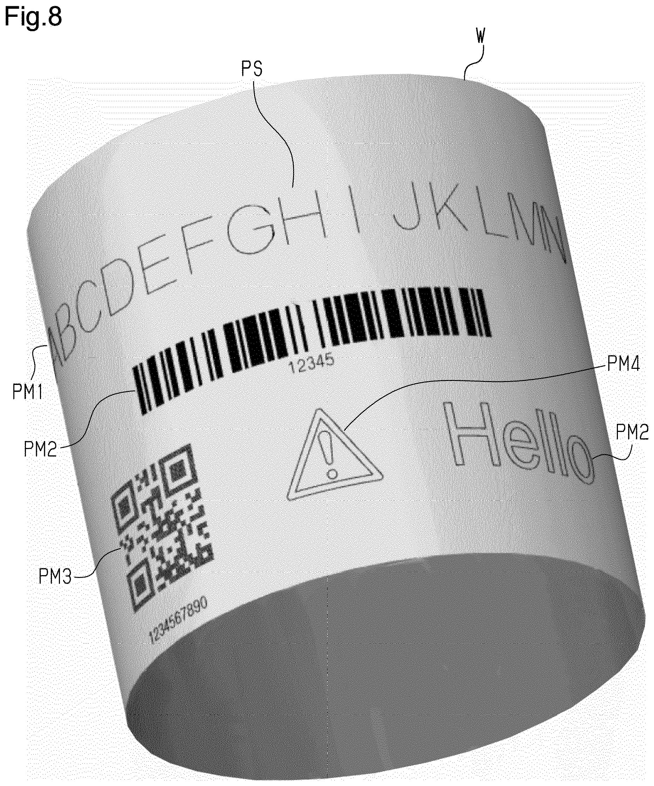

The position, orientation, and the like of the profile information PD1 displayed on the three-dimension display screen 106 can be edited. In the present embodiment, the processing subject surface PS of the workpiece W is the side surface of a cylinder as shown in Fig. 8. Thus, parameters are edited with the three-dimension display screen 106 to turn the cylinder by 90° so that its center lies on the y-axis.

### Add three-dimensional positioning representation data to processing subject surface (S9)

The three-dimensional positioning data representations PI1 to PI5 are shown on the surface of the profile information PD1 displayed on the three-dimension display screen 106. The three-dimension display screen 106 can be switched to display only the profile information PD or display the three-dimensional positioning data representations PI superimposed on the profile information PD. In this case, after the input and editing of the profile information PD are completed, the processing pattern that was saved is selected and displayed.

Fig. 7A shows a state in which the three-dimensional positioning data representations PI1 to PI5 are displayed on the surface of the profile information PD1. The saved processing pattern PP is displayed on the three-dimension display screen 106 as the three-dimensional positioning data representations PI. In this example, the positional relationship of the profile information PD1 and the three-dimensional positioning data representations PI1 to PI5 is not adjusted. Thus, the three-dimensional positioning data representation PI5 and the like are not shown on the profile information PD1.

### Edit processing condition (S10)

The processing condition PC is edited on the three-dimension display screen 106 with the three-dimensional positioning data representations PI1 to PI5 shown on the surface of the profile information PD1. In this case, the "processing condition PC" refers to the positional relationship of the profile information PD1 and the processing pattern PP. Further, various processing conditions such as concentration during processing are set with the three-dimension display screen 106.

### Initiate processing? (S11)

When editing of the processing condition PC is completed, the "initiating processing" icon is clicked (S11: YES). This allows the laser processing device 10 to acknowledge that editing of processing condition PC (S10) has been completed. Then, a process for performing laser processing is executed. If the "initiating processing" icon is not clicked (S11: NO), the laser processing device 10 determines that editing of the processing condition PC (S10) has not been completed and remains in a standby state.

### Generate three-dimensional laser processing control data (S12)

When the icon for initiating processing is clicked, the three-dimensional laser processing control data generator 628 of the controller 62 in the controller unit 13 generates the three-dimensional laser processing control data CPD. The generated three-dimensional laser processing control data CPD is transmitted to the laser scanner 42. The "three-dimensional laser processing control data CPD" is converted from the processing vector data of the processing pattern PP, which is two-dimensional information, based on the positional relationship of the profile information PD1 and the processing pattern PP. In this manner, when editing of the processing condition PC (S10) is completed, the three-dimensional laser processing control data CPD is generated only once. The processing amount is large when the processing vector data of the processing pattern PP, which is two-dimensional information, is converted to the three-dimensional laser processing control data CPD. Thus, in the present embodiment, such data conversion is performed only through this procedure.

### Perform printing in accordance with processing condition PC (S13)

Based on the received three-dimensional laser processing control data CPD, the laser scanner 42 emits the processing laser beam LB to the printing area PA of the workpiece W with the galvanometer scanner and the beam expander.

### Advantages of Embodiment

(1) The laser processing device 10 and laser processing method in accordance with the present embodiment allow a three-dimensional processing result, which is based on the processing pattern PP added to the processing subject surface PS of the workpiece W, to be smoothly checked and edited without adding a large load on the laser processing device 10.
(2) Unless editing of the processing condition PC (S10) is completed, the processing vector data of the processing pattern PP, which is two-dimensional information, is not converted to the three-dimensional laser processing control data CPD based on the positional relationship of the profile information PD1 and the processing pattern PP. In the three-dimension display screen 106, the processing pattern PP is converted to the three-dimensional positioning data representation PI of which the amount of data is extremely small. Thus, the processing amount is extremely small during three-dimensional coordinate conversion of the three-dimensional positioning data representation PI. This allows for smooth editing of the processing condition PC even if the laser processing device 10 is low has a low computer processing capability.
(3) The processing pattern PP allows for optimal processing of different types of input, such as a character string (text data), a symbol, a barcode, a two-dimensional barcode, an image data, and/or the like. Two-dimensional laser processing control data corresponding to text data, symbol, barcode, and/or two-dimensional barcode is stored in advance. Thus, by merely inputting the necessary information, the processing pattern PP can be generated without adding processing load.
(4) The three-dimensional positioning data representation PI is expressed simply on the three-dimension display screen 106. The three-dimensional positioning data representation PI is displayed so that the user can intuitively recognize the processing pattern PP regardless of type when editing the processing condition PC (S10) even if the content of the processing pattern PP cannot be viewed.
(5) If the processing pattern PP has to be checked, the three-dimension display screen 106 can be switched to the two-dimension display screen 105 whenever desired. Further, after editing the processing pattern PP on the two-dimension display screen 105, by switching to the three-dimension display screen 106, the edited processing pattern PP will be reflected on the three-dimensional positioning data representation PI.
(6) The processing pattern PP of a character string is converted to the three-dimensional positioning data representation PI that is displayed by an outline of each character, which is marked by an X, with each character separated from the other characters. Thus, even when the processing pattern PP of a processing pattern is converted to the three-dimensional positioning data representation PI, the interval between characters can be checked easily.
(7) The processing pattern PP of a one-dimensional barcode is converted to the three-dimensional positioning data representation PI that is displayed by an outline of the barcode with vertical lines inside the outline. Thus, even though the content of the processing pattern PP is not displayed, the user can intuitively recognize that the three-dimensional positioning data representation PI represents a barcode.
(8) The processing pattern PP of a two dimensional barcode is converted to the three-dimensional positioning data representation PI that is displayed by an outline of the barcode with vertical lines and horizontal lines extending in the form of a grating inside the outline. Thus, even though the content of the processing pattern PP is not displayed, the user can intuitively recognize that the three-dimensional positioning data representation PI represents a two-dimensional barcode.
(9) Further, the processing pattern PP of an image data is converted to the three-dimensional positioning data representation PI that is displayed by an outline of the barcode with horizontal lines inside the outline. Thus, even though the content of the processing pattern PP is not displayed, the user can intuitively recognize that the three-dimensional positioning data representation PI represents an image data.
(10) The shape of the workpiece W of the profile information PD may be input as a basic figure that is a simple shape, such as a parallelepiped, a cylinder, a sphere, a cone, a sphere, or the like. Thus, a large load, such as that for processing three-dimensional coordinate data, will not be applied during processing. Consequently, when the processing condition PC is edited (S10), the profile information PD can be easily moved and the orientation of the profile information PD can be easily changed. Further, processing is simplified when converting the processing vector data of the processing pattern PP, which is two-dimensional information, to the three-dimensional laser processing control data CPD based on the positional relationship of the profile information PD1 and the processing pattern PP.

### Modified Example

The present embodiment may be modified as described below.

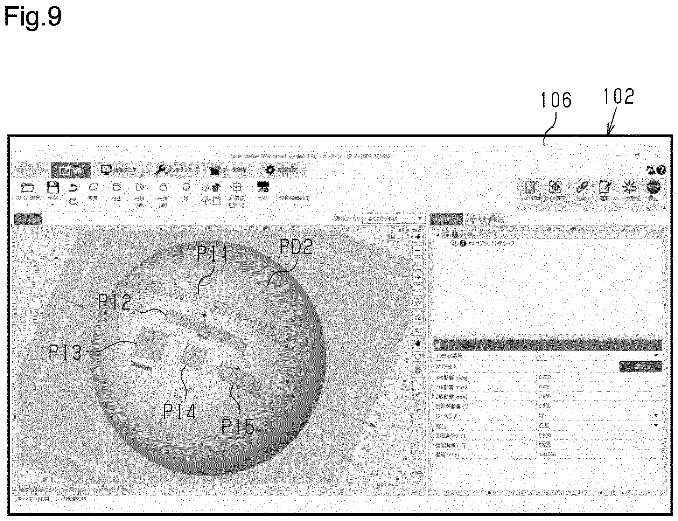

Fig. 9 is a diagram showing the three-dimension display screen 106 in a state in which the three-dimensional positioning data representation PIG of the processing pattern PPG is displayed on the processing subject surface PS of the workpiece W that is a spherical surface.

In the above embodiment, the profile information PD is exemplified by a cylinder. When the profile information PD is changed from a cylinder to a sphere, the shape of the three-dimensional positioning data representation PIG is also changed accordingly. Even when the profile information PD is changed in such a manner, the amount of data of the three-dimensional positioning data representation PI is small. This allows for smooth processing.

Figs. 10A to 10G are diagrams showing further examples of the expressions of the three-dimensional positioning data representation PI. In the above embodiment, to distinguish between different types of the processing pattern PP, as shown in Fig. 10A, a character string is displayed by a box and an X indicating the printing area PA that encompasses the processing pattern PP. Fig. 10B shows a one-dimensional barcode displayed by vertical lines inside a rectangular outline. Fig. 10C shows a two-dimensional barcode displayed by a square outline with lines extending inside the outline in the form of a grating. Fig. 10D shows an image data or the like displayed by an outline and horizontal lines in the outline. There is no limitation to the expressions described above.

For example, as shown in Fig. 10E, a character string may be expressed by only outlines. As shown in Fig. 10F, a character string may be expressed by certain characters, for example, an "X." As shown in Fig. 10G, a character string may be expressed by symbols, for example, "circles."

As shown in Fig. 10H, a mark, a code, an image data or the like may be expressed by a rectangular outline with diagonals intersecting the outline. Alternatively, as shown in Fig. 10I, a mark, a code, an image data or the like may be expressed by shading an entire plane (e.g., entire rectangular outline). As shown in Fig. 10J, the three-dimensional positioning data representation PI may be expressed by a polygon extending along the printing area PA of the processing pattern PP.

### Other Grouping Rules

In the present embodiment, suffixes are automatically grouped with a series of character strings or barcodes. Further, the processing patterns in a range selected by the user are grouped.

The grouping of a processing pattern PP and the expression of its three-dimensional positioning data representation PI follow a predetermined condition as described below.

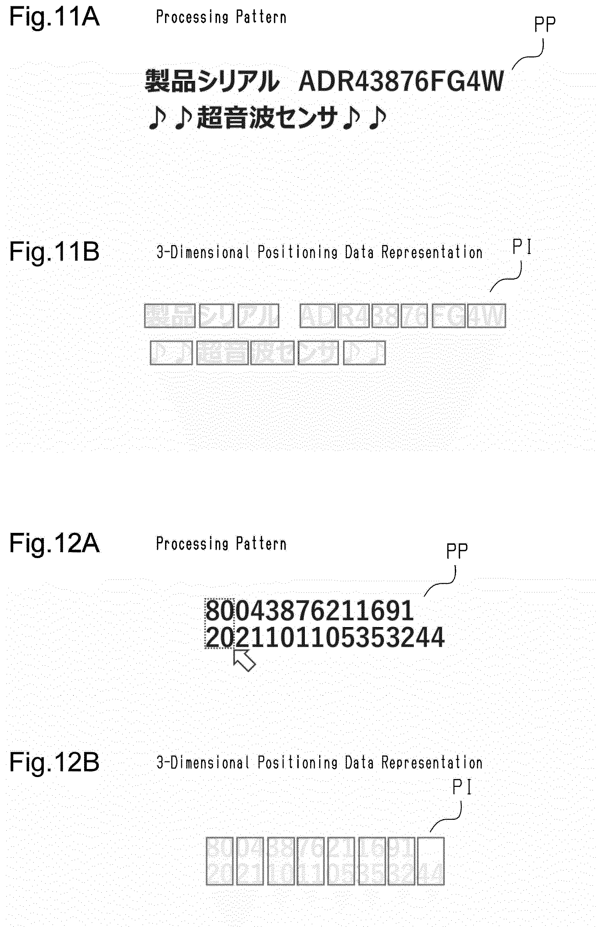

Fig. 11A is a diagram illustrating one example of a processing pattern. Fig. 11B shows the processing pattern grouped under a predetermined condition and converted to a three-dimensional positioning data representation.

In this case, the grouping rule specifies the number of predetermined processing patterns, which is set in advance, as the predetermined condition. More specifically, two adjacent characters or two adjacent symbols are grouped.

As shown in Fig. 11A, the processing pattern PP includes the kanji and kana of " 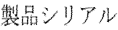 ", the letters and numerals of "ADR43876FG4W", the symbol of " 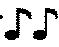 ", and the kanji and kana of " 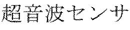 ". When this rule is selected, as shown in Fig. 11B, the adjacent characters such as
" 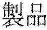 ",
" 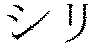 ",
" 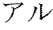 " are grouped.

Fig. 12A is a diagram illustrating another example of a processing pattern. Fig. 12B shows the processing pattern grouped under another predetermined condition and converted to a three-dimensional positioning data representation.

In this case, the grouping rule specifies a predetermined size, which is set in advance, for a processing pattern as the predetermined condition. More specifically, an area on the screen is specified with a mouse, and the vertical height of the area that is 3 mm and the horizontal width of the area that is 2 mm are stored as the predetermined size. Alternatively, a keyboard may be used to input the vertical height of 3 mm and the horizontal width of 2 mm. As a result, as shown in Fig. 12B, the processing pattern PP is selected and grouped in ranges having the vertical height of 3 mm and the horizontal width of 2 mm.

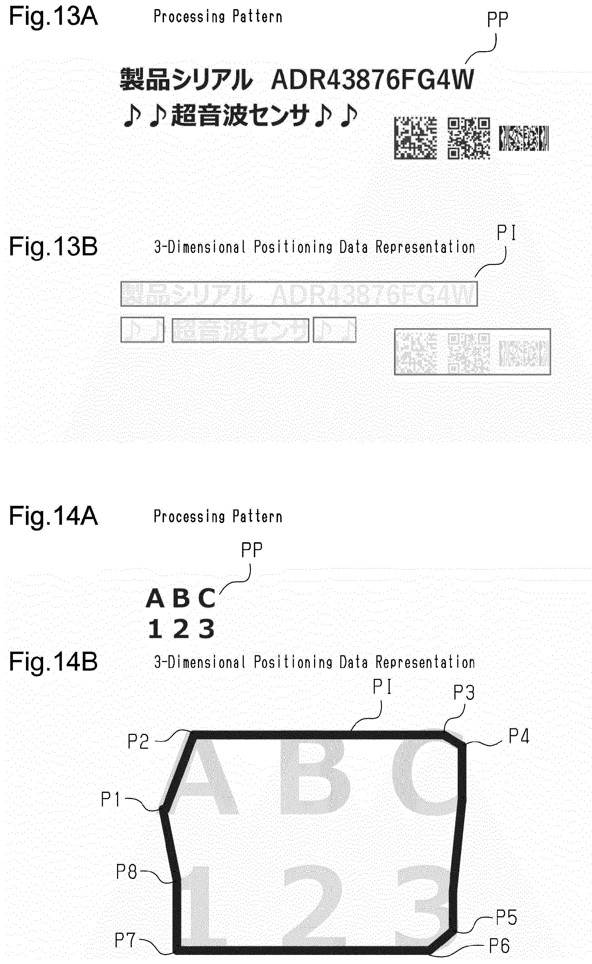

Fig. 13A is a diagram illustrating a further example of a processing pattern. Fig. 13B shows the processing pattern grouped under a further predetermined condition and converted to a three-dimensional positioning data representation.

In this case, grouping is performed in accordance with the type of each processing pattern PP. More specifically, a character string of kanji, kana, letters, and numerals are grouped together, symbols are grouped together, and codes such as one-dimensional barcodes and two-dimensional barcodes are grouped together. As shown in Fig. 13B, this forms a three-dimensional positioning data representation PI of a group of character strings, a group of symbols, and a group of codes.

Fig. 14A is a diagram illustrating a further example of a processing pattern. Fig. 14B shows the processing pattern grouped under a further predetermined condition and converted to a three-dimensional positioning data representation.

As shown in Fig. 14A, the example of the processing pattern in this case includes two rows, with the character string of "ABC" in the upper row, and the character string of "123" in the lower row. In this case, processing patterns PP that are of the same type are grouped together. In this respect, the rule described above is applied.

In this case, the grouped processing pattern PP is converted to the three-dimensional positioning data representation PI that is displayed as a polygonal outline as shown in Fig. 14B. The vertices of the polygon define singularity points including a starting point, an ending point, an inflection point, and a vertex for laser processing of the processing pattern PP. Examples of singularity points will now be given. The "starting point" is where laser processing of the processing pattern begins. The "ending point" is where laser processing of the processing pattern finishes. The "inflection point" is a reversing point of the scanning direction or vertical scanning direction of laser processing. The "vertex" is where an x-coordinate or a y-coordinate takes a maximum value or a minimum value. The singularity point is not limited to the above example and may be any point that can be unambiguously selected based on one criterion or another.

A specific example will now be described with reference to Fig. 14B. For example, the outline starts at a lower left point P1 that is the starting point of the processing pattern PP. From this point, the outline is drawn along the contour of "A", bent horizontally at the vertex of "A" located at an upper left point P2, and then bent diagonally downward at the vertex of "C" located at point P3. Then, the outline is bent downward at the beginning point when writing "C" located at starting point P4, and then bent diagonally downward at a right first vertex of "3" located at point P5. The outline is then bent horizontally at a right second vertex located at point P6 below point P5 and extended to a lower left vertex of "1" located at point P7. Then, the outline extends via the beginning point when writing "1" located at point P8 and returns to point P1. This closes the polygon of the outline. Points P1 to P8 define the vertices of the polygon. The starting point, the ending point, and the like differ in accordance with the laser controlling algorithm. Nevertheless, there is no limitation to the selection of the singularity points as long as the shape of the processing pattern PP of the character string grouped into a polygon can be recognized.

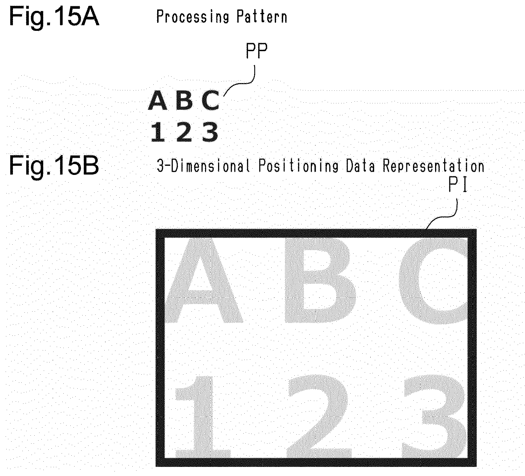

Fig. 15A is a diagram illustrating a further example of a processing pattern. Fig. 15B shows the processing pattern grouped under a further predetermined condition and converted to a three-dimensional positioning data representation. In this example, processing patterns PP that are of the same type are grouped together under the rule described above.

With reference to Fig. 15B, with the rule of this example, the outline of the three-dimensional positioning data representation PI defines tangents contacting the printing area PA. The tangents include line segments extending in the scanning direction of the processing pattern PP and line segments extending in a direction orthogonal to the scanning direction. More specifically, the outline is a rectangle. The sides of the rectangle extend through the outermost width-wise point (farthest point) in the scanning direction of the processing pattern PP and the outermost height-wise point (farthest point) in a direction orthogonal to the scanning direction.

Preferably, the color of the three-dimensional positioning data representation PI is varied in accordance with type.

The present embodiment is exemplified by a three-dimensional scanning means including a galvanometer scanner and a beam expander. Alternatively, scanning may be performed through another means.

In the profile information input unit 625, the basic figures are exemplified by a plane, a parallelepiped, a cylinder, a cone, and a sphere. This, however, is not a limitation. The basic figure may be a spheroid or a ring. It is preferable that the figure be processable such as in a manner in which a sphere is cut into a hemisphere. It is preferable that combinations be allowed such as a manner in which a parallelepiped is combined with a hemisphere.

In the present embodiment, processing patterns PP are all converted to three-dimensional positioning data representations PI. Instead, depending on the capacity of the controller 62 of the laser processing device 10, for example, conversions may be performed with only image data, and characters may do not have to be converted from processing patterns PP when displayed.

In the present embodiment, the processing patterns PP are all displayed on the two-dimension display screen 105. The processing pattern PP of the present embodiment, however, includes the two-dimensional laser emission vector information. Thus, the amount of data of the processing pattern PP is relatively large in the present embodiment. In this example, for example, "A" may be converted to simple display data including two inclined lines and one horizontal line.

The flowchart illustrating in Fig. 4 is one example of the embodiment. Thus, steps may be added, deleted, varied, or changed in order.

For example, the input of a processing pattern (S1) to the editing of the processing pattern (S4) may be exchanged with the input of profile information (S6) to the editing of the profile information (S8).

The above embodiment and the modified examples described below may be combined as long as there is no technical contradiction.

The present embodiment is one example of the present invention. It should be apparent to those skilled in the art that the present invention may be embodied in many other specific forms without departing from the spirit or scope of the claims.
The laser processing device 10 in accordance with the present disclosure (e.g., controller 62 of controller unit 13) may be implemented by a computer system including one or more processors and a non-transitory memory (non-transitory computer readable media) storing commands (computer programs) that are executable by the processors so that the processors execute control in accordance with the above embodiments and modifications (e.g., processing of laser processing device (S1 to S13) or the like). Processors include a Central Processing Unit (CPU), a Graphics Processing Unit (GPU), a dedicated hardware circuit such as an Application Specific Integrated Circuit (ASIC), or a combination of these items. Non-transitory computer-readable storage media include a random access memory (RAM), a read only memory (ROM), an optical disk storage device such as a CD-ROM, a magnetic disk storage device, a magnetic storage device, a flash memory, or any other medium that can be used to store desired program codes in the form of instructions or data structures and be accessible by a computer.

The two-dimension displaying unit 620, the processing pattern input unit 621, the laser emission vector information memory 622, the three-dimensional positioning data representation generator 623, the three-dimension displaying unit 624, the profile information input unit 625, the basic figure memory 626, the processing condition setting unit 627, and the three-dimensional laser processing control data generator 628 that are shown in Fig. 3 may be functionality blocks of the laser processing device 10 in accordance with the present embodiment. The laser processing device 10 may have a processor execute a computer program to implement the functionality blocks shown in Fig. 3.

## Claims

1. A laser processing device configured to emit a laser beam to a processing subject surface of a workpiece arranged in a working area and perform processing based on a set processing pattern, wherein the laser processing device includes a laser beam source that generates a processing laser beam, a scanner that scans the working area with the processing laser beam emitted from the laser beam source, and a controller that controls the laser beam source and the scanner, the laser processing device being **characterized by**:
a processing pattern input unit to which the processing pattern is input as two-dimensional information;
a two-dimension displaying unit for displaying a screen used to edit the processing pattern input from the processing pattern input unit;
a three-dimensional positioning data representation generator for generating a three-dimensional positioning data representation corresponding to a three-dimensional representation representing a printing area of the processing pattern edited on the screen displayed by the two-dimension displaying unit;
a profile information input unit to which profile information representing a three-dimensional shape of a processing subject surface is input;
a three-dimension displaying unit for displaying a screen for editing the profile information input from the profile information input unit;
a processing condition setting unit for setting a processing condition as position information on the screen displayed by the three-dimension displaying unit by representing a position of the processing pattern with the three-dimensional positioning data representation on the processing subject surface shown based on the profile information; and
a three-dimensional laser processing control data generator for generating three-dimensional laser processing control data used to process the processing subject surface based on the processing pattern in accordance with the processing condition set by the processing condition setting unit.

2. The laser processing device according to claim 1, **characterized in that**:
the processing pattern includes text data, a symbol, a barcode, or a two-dimensional barcode; and
the processing pattern input unit reads laser emission vector information corresponding to information input from laser emission vector information that is stored in advance based on input information to generate a two-dimensional processing pattern.

3. The laser processing device according to claim 1, **characterized in that**:
the processing pattern includes an image data; and
the processing pattern input unit generates laser emission vector information corresponding to an input image data to generate a two-dimensional processing pattern.

4. The laser processing device according to any one of claims 1 to 3, **characterized in that** the three-dimensional positioning data representation generated by the three-dimensional positioning data representation generator is data in which the processing pattern is grouped in accordance with a predetermined condition and collectively displayed by the three-dimension displaying unit.

5. The laser processing device according to claim 4, **characterized in that** the three-dimensional positioning data representation generated by the three-dimensional positioning data representation generator is data that is grouped and collectively displayed on the three-dimension displaying unit on condition that the processing pattern is of the same type.

6. The laser processing device according to claim 4, **characterized in that** the three-dimensional positioning data representation generated by the three-dimensional positioning data representation generator is data in which the processing pattern of different types is grouped in accordance with a predetermined condition and collectively displayed by the three-dimension displaying unit.

7. The laser processing device according to claim 6, **characterized in that** the predetermined condition is a predetermined range set in advance or a number of predetermined processing patterns set in advance.

8. The laser processing device according to any one of claims 1 to 7, **characterized in that** the three-dimensional positioning data representation generated by the three-dimensional positioning data representation generator is data for displaying an outline indicating a printing area of the processing pattern.

9. The laser processing device according to claim 8, **characterized in that** the outline is data displayed as a rectangle having a width in a scanning direction of the processing pattern and a height in a direction orthogonal to the scanning direction.

10. The laser processing device according to claim 9, **characterized in that** the rectangle includes a line segment that is a tangent contacting the printing area.

11. The laser processing device according to claim 8, **characterized in that** the outline is data displayed as a polygon surrounding the processing pattern.

12. The laser processing device according to claim 11, **characterized in that** a vertex of the polygon is a specified singularity point including a starting point, an ending point, an inflection point, and a vertex for laser processing of the processing pattern.

13. The laser processing device according to claim 8, **characterized in that** the outline is data displayed as a circle or an ellipse encompassing the processing pattern.

14. The laser processing device according to any one of claims 1 to 13, **characterized in that** when the three-dimensional positioning data representation is text data and a symbol, text and symbol of a processing pattern are displayed separated from each other.

15. The laser processing device according to any one of claims 1 to 14, **characterized in that** the three-dimensional positioning data representation is data for distinguishing each type with a different marking.

16. The laser processing device according to claim 15, **characterized in that** the three-dimensional positioning data representation is data for distinguishing each type with a different color.

17. The laser processing device according to any one of claims 1 to 16, **characterized in that** the scanner includes a first scanner that has the processing laser beam emitted from the laser beam source scan the working area in a first direction, and a second scanner that scans a second direction orthogonal to the first direction with the scanned laser beam of the first scanner.

18. The laser processing device according to any one of claims 1 to 17, **characterized in that** the profile information input unit stores basic figures in advance as profile information indicating a three-dimensional shape of the processing subject surface, and generates profile information through selection of a basic figure that is approximate to the processing subject surface of the workpiece from the basic figures.

19. The laser processing device according to any one of claims 1 to 18, **characterized in that** the profile information input unit generates profile information from three-dimension data representing a three-dimensional shape of the workpiece that is input as the profile information indicating a three-dimensional shape of the processing subject surface of the workpiece.

20. A laser processing method for use with a laser processing device configured to emit a laser beam to a processing subject surface of a workpiece arranged in a working area and perform processing based on a set processing pattern, wherein the laser processing device includes a laser beam source that generates a processing laser beam, a scanner that scans the working area with the processing laser beam emitted from the laser beam source, and a controller that controls the laser beam source and the scanner, the laser processing method being **characterized by**:
a processing pattern inputting step of inputting the processing pattern as two-dimensional information;
a two-dimension displaying step of displaying a screen on a display unit to edit the processing pattern input in the processing pattern inputting step;
a three-dimensional positioning data representation generating step of generating a three-dimensional positioning data representation corresponding to a three-dimensional representation representing a laser beam printing area of the processing pattern edited in the two-dimension displaying step;
a profile information inputting step of inputting profile information representing a three-dimensional shape of a processing subject surface;
a three-dimension displaying step of displaying a screen on the display unit for editing the profile information input in the profile information inputting step;
a processing condition setting step of setting a processing condition as position information by representing a position of the processing pattern with the three-dimensional positioning data representation on the processing subject surface shown based on the profile information in the three-dimension displaying step; and
a three-dimensional laser processing control data generating step of generating three-dimensional laser processing control data used to process the processing subject surface based on the processing pattern in accordance with the processing condition set in the processing condition setting step.
